# EUROPÄISCHE PATENTSCHRIFT

(11) **EP 3 238 901 B1**
(45) Veröffentlichungstag und Bekanntmachung des Hinweises auf die Patenterteilung: **30.10.2019**
(21) Anmeldenummer: 17168375.8
(22) Anmeldetag: 27.04.2017
(51) Int. Cl.: B29B 7/60, F04B 17/03, F04B 53/16, B29B 7/74, B29C 67/24

(54) **FUNKTIONSBLOCK FÜR EINE POLYURETHANANLAGE UND DESSEN VERWENDUNG**
FUNCTION BLOCK FOR A POLYURETHANE INSTALLATION AND USE THEREOF
BLOC FONCTIONNEL POUR UNE INSTALLATION DE POLYURÉTHANE ET SON UTILISATION

(30) Priorität: 29.04.2016 DE 102016108020
(43) Veröffentlichungstag der Anmeldung: 01.11.2017
(73) Patentinhaber: Polyplan-GmbH Polyurethan-Maschinen, 82064 Straßlach-Dingharting (DE)
(72) Erfinder: RESCH, Johann, 82064 Strasslach (DE); ACHTER, Martin, 82067 Ebenhausen (DE)
(74) Vertreter: Koch Müller Patentanwaltsgesellschaft mbH

(56) Entgegenhaltungen:
- EP-A1- 0 976 514
- EP-A2- 0 806 567
- DE-A1- 3 014 175
- DE-A1- 19 740 436
- US-A- 3 285 184
- US-A- 4 170 440
- US-A- 4 211 345
- US-A1- 2011 168 014

## Beschreibung

Die Erfindung betrifft einen Funktionsblock für eine Polyurethananlage gemäß dem Oberbegriff von Patentanspruch 1.

Bekanntlich wird Polyurethan durch Mischen von flüssigen Komponenten hergestellt. Es ist möglich, Polyurethan direkt am Ort der Applikation herzustellen, indem die zur Bildung benötigten Flüssigkeiten durch einen Mischkopf ausgegeben werden. Um die gewünschten Materialeigenschaften des so gebildeten Kunststoffs zu erhalten, ist es entscheidend, die flüssigen Komponenten präzise zu dosieren. Weitere Parameter, wie Druck und Temperatur, müssen ebenfalls kontrolliert werden, um die Materialeigenschaften optimal beeinflussen zu können.

Um eine Polyurethananlage herzustellen, wird also eine Vielzahl an Vorrichtungen benötigt, die untereinander fluidverbunden und gesteuert werden müssen. Die flüssigen Komponenten müssen zumindest aus einem Reservoir gefördert werden, auf einen vorgegebenen Druck gebracht werden und dann dosiert dem Mischkopf zugeführt werden. Die hierzu erforderlichen Vorrichtungen werden üblicherweise über Rohrleitungen verbunden.

Eine Mischanlage mit Taumelscheibenpumpe ist aus der US 4,170,440 A bekannt. Eine weitere Mischanlage ist aus der US 3,285,184 A bekannt. Eine Taumelscheibenpumpe ist aus der DE 197 40 436 A1 bekannt.

Bei einer solchen gewöhnlichen Polyurethananlage ergeben sich mehrere Nachteile. Durch die Rohrleitungsverbindungen verlängert sich die Wegstrecke, über die die fluiden Komponenten gefördert werden müssen. Dadurch treten Strömungs-, Druck- und Temperaturverluste auf. Zudem ist der Montageaufwand zum Zusammensetzen der Anlage hoch. Es werden hierbei viele getrennte Bauteile benötigt. Wegen der zum Teil langen Strömungswege ist nur eine ungenügende Regelbarkeit der Anlage gegeben, die allerdings benötigt wird, um zwei oder Mehrkomponenten miteinander zu vermischen. Außerdem wird für die Anlage eine relativ große Stellfläche für die verschiedenen Komponenten benötigt. Dadurch sind die Kosten der Anlage entsprechend erhöht. Aufgrund der vielen Komponenten ist die Anlage relativ immobil. Aufgrund des hohen Gewichts und des hohen Platzbedarfs ist eine gewöhnliche Förderanlage auch nicht geeignet, an einem Roboter montiert zu werden, was wünschenswert ist, wenn der Polyurethanauftrag automatisiert werden soll.

Eine Aufgabe der vorliegenden Erfindung ist es daher, eine Vorrichtung zur Dosierung einer flüssigen Komponente anzugeben, die sich durch einen geringen Platzbedarf auszeichnet, wenige Bauteile benötigt und möglichst kurze Förderwegstrecken der Komponente aufweist.

Diese Aufgabe wird gelöst durch einen Funktionsblock gemäss Anspruch 1 für eine Mischanlage zur Dosierung einer flüssigen Komponente, insbesondere zur Herstellung von Polyurethan, der Folgendes aufweist:
- einen Einlass zur Zuführung der Komponente,
- einen Auslass zur Ausförderung der Komponente,
- eine Dosierpumpe zur Förderung der Komponente aus dem Einlass und zur Druckerhöhung der Komponente,
- einen Antrieb für die Dosierpumpe,
- eine Kupplung zur Verbindung zwischen der Dosierpumpe und dem Antrieb,
dadurch gekennzeichnet, dass
der Funktionsblock als integrale Einheit ausgebildet ist, indem die Komponenten des Funktionsblocks durch ein gemeinsames Gehäuse zu einer integralen Einheit verbunden sind, und die Fluidführung der Komponente zwischen dem Einlass und dem Auslass vollständig innerhalb des Funktionsblocks geführt ist, wobei der Funktionsblock eine Achse aufweist, auf der die Dosierpumpe, die Kupplung und der Antrieb fluchtend angeordnet sind, und wobei der Funktionsblock eine Filtereinheit umfasst, die fluchtend auf der Achse des Funktionsblocks angeordnet ist und in einem Strömungsweg zwischen dem Einlass und der Dosierpumpe fluidverbunden ist.

Ein Vorteil der Erfindung ist dabei, dass durch die fluchtende Anordnung der Dosierpumpe, der Kupplung und des Antriebs ein Funktionsblock erhalten wird, der alle wesentlichen benötigten Funktionen zur Dosierung einer fluiden Komponente in einer sehr kompakten und platzsparenden Bauweise vereint. Durch die fluchtende Anordnung entsteht so ein Funktionsblock, dessen benötige Stellfläche sich auf den Querschnitt der Komponenten quer zu der Achse des Funktionsblocks reduziert. Durch die integrale Bauweise entfällt außerdem die Notwendigkeit von Verbindungsleitungen zwischen den verschiedenen Bauteile, so dass die Förderwegstrecken der Komponente deutlich verkürzt werden können. Die einteilige Ausführung birgt weiter den Vorteil, dass die Anzahl benötigter Komponenten reduziert werden kann, wodurch die Kosten gesenkt werden und der Montageaufwand reduziert wird. So wird eine Lösung zur Dosierung und Druckbeaufschlagung einer Komponente geschaffen, die robust ist, sich durch eine einfache Handhabung auszeichnet und an einem Roboter montierbar ist.

Unter "integral" soll im Sinne der vorliegenden Erfindung verstanden werden, dass die Bauteile der integralen Einheit zusammenhängend, oder formschlüssig miteinander verbunden sind, zumindest aber konstruktiv verbunden, beispielsweise verschraubt, verschweißt oder verklebt sind. Die Komponenten können auch durch ein gemeinsames Gehäuse zu einer integralen Einheit verbunden werden. Entscheidend ist im Sinne der Erfindung, dass die Komponenten derart zueinander angeordnet sind, dass ein einstückiger Funktionsblock entsteht, in dem die Komponenten mechanisch starr miteinander verbunden sind.

Erfindungsgemäß ist die Fluidführung der Komponente zwischen dem Einlass und dem Auslass vollständig innerhalb des Funktionsblocks geführt. Dadurch kann die Wegstrecke des Komponentenflusses vom Einlass zum Auslass verkürzt werden, so dass die Strömungs- und Temperaturverluste minimiert werden. Dadurch kann die Dosiergenauigkeit der Komponente optimiert werden. Durch die kürzeren Wegstrecken erhöht sich auch die Regelungsgenauigkeit für den jeweiligen Materialfluss, so dass auch dies die Dosiergenauigkeit der Komponente erheblich verbessert.

Erfindungsgemäss wird mit der Filtereinheit die Komponente vor der Druckbeaufschlagung gereinigt. Hierdurch werden die Materialeigenschaften des Endprodukts verbessert. Außerdem wird dadurch der Verschleiß der Dosierpumpe verringert. Durch die fluchtende Anordnung auf der Achse des Funktionsblocks werden die Abmessungen des Funktionsblocks dabei nicht unnötig vergrößert und eine äußerst kompakte Bauweise erzielt.

Es ist bevorzugt, dass die Filtereinheit starr an den Funktionsblock angeflanscht ist. Dies ermöglicht einen einfachen Wechsel der Filtereinheit oder eines darin enthaltenen Filters bei gleichzeitiger Stabilität des Aufbaus. Weiter vorzugsweise ist vorgesehen, dass die Filtereinheit am distalen Ende, also an der der Kupplung bzw. dem Antrieb gegenüberliegenden Seite des Funktionsblocks angeflanscht ist. Die Filtereinheit ist damit gut zugänglich, was den Filterwechsel weiter erleichtert.

Es ist weiter bevorzugt, dass der Funktionsblock eine Signal-Verteilerbox umfasst, die eine Vielzahl von Anschlüssen zur Verbindung mit Sensoren, bevorzugterweise mindestens vier Anschlüsse, weiter bevorzugt acht Anschlüsse, bereitstellt und dazu ausgebildet ist, als Schnittstelle zu einer Recheneinheit zu fungieren. Durch die Integration der Signal-Verteilerbox in den Funktionsblock können die Signalwege zu den Sensoren verkürzt werden. Dadurch kann eine Verkürzung der Regelstrecke erreicht werden. Die hohe Anzahl an Anschlüssen ermöglicht es, die Funktionseinheit flexibel an verschiedenste Betriebsbedingungen anzupassen. So können beispielsweise Eigenschaften der Komponente vor Zuführung in die Funktionseinheit wie die Temperatur gemessen und direkt in den Funktionsblock eingespeist werden. Ebenso kann der Druck an einem Mischkopf erfasst werden, der an den Auslass anschließbar ist, um die Dosierung der Komponente noch genauer zu steuern.

Vorzugsweise ist in dem Funktionsblock ein erster Drucksensor, mit dem ein Speisedruck der Komponente an dem Einlass detektierbar ist, und/oder ein zweiter Drucksensor, mit dem ein Eingangsdruck der Dosierpumpe detektierbar ist, und/oder ein dritter Drucksensor, mit dem ein Ausgabedruck der Dosierpumpe detektierbar ist, integriert. Damit kann der Druck der Komponente an relevanten Punkten im Strömungsweg erfasst werden und die Präzision der Druckbeaufschlagung erhöht werden. Da der gesamte Strömungsweg innerhalb des Funktionsblocks geführt ist, sind die Sensoren in dem Funktionsblock integriert. Dadurch sind die Sensoren gegen äußere Störeinflüsse geschützt, was die Genauigkeit der Messwerterfassung erhöht. Außerdem wird so die Größe des Funktionsblocks nicht vergrößert. Die Sensoren können an die ebenfalls in dem Signalblock integrierte Signal-Verteilerbox angeschlossen werden, so dass der gesamte Signalweg kurz und der Funktionsblock kompakt bleibt.

Es ist weiter bevorzugt, dass ein Temperatursensor in dem Funktionsblock integriert ist, mit dem die Temperatur der Komponente detektierbar ist. Eine Erhöhung der Komponententemperatur während des Betriebs kann auf einen Defekt im Förderweg hindeuten. Es kann mit der Temperaturmessung also eine einfache Überwachungsmöglichkeit der Funktionalität des Funktionsblocks geschaffen werden. Darüber hinaus ist die Kenntnis der Temperatur zu einer möglichst exakten Dosierung der Komponente erforderlich, um so die Menge der in einer bestimmten Zeiteinheit geförderten Komponente exakt erfassen bzw. berechnen zu können.

In einer weiteren bevorzugten Ausführungsform ist in dem Strömungsweg vor dem Auslass ein Volumensensor vorgesehen, mit dem die Durchflussmenge der Komponente an dem Auslass detektierbar ist. Hiermit kann der Volumenstrom der Komponente und deren Dosierung überwacht werden.

Es ist weiter bevorzugt, dass ausgangsseitig der Dosierpumpe ein Rückschlagventil vorgesehen ist, das einen Rückfluss der Komponente in entgegen der Förderrichtung verhindert. Damit kann ein Austritt der Komponente verhindert werden, wenn ein an den Einlass angeschlossenes Reservoir von diesem getrennt wird. Zudem wird die Betriebssicherheit der Funktionseinheit erhöht, da bei einer Verstopfung des Mischkopfes die Komponente nicht zurück in die Dosierpumpe gedrückt wird.

Vorzugsweise ist ein Druckbegrenzungsventil im Strömungsweg ausgangsseitig der Dosierpumpe vorgesehen, das derart ausgebildet ist, dass bei Überschreitung eines Maximaldrucks eine Fluidverbindung mit der Einlassseite der Dosierpumpe hergestellt wird. So kann der Maximaldruck in dem Funktionsblock über lange Zeit aufrechterhalten werden, selbst wenn der Funktionsblock lange Zeit nicht in Betrieb ist.

Es ist außerdem bevorzugt, dass der Funktionsblock ein Sicherheitsventil umfasst, das in Fluidverbindung mit dem Strömungsweg der Komponente angeordnet ist derart ausgebildet ist, dass es bei Überschreiten eines maximalen Systemdrucks öffnet, so dass der Druck in dem Strömungsweg abfällt. Damit kann bei einer Fehlfunktion des Systems wie einer Verstopfung Schäden an den Komponenten des Funktionsblocks vorgebeugt werden.

Es ist weiter bevorzugt, dass an dem Antrieb ein Lüfter zur Kühlung des Antriebs angeordnet ist. Damit kann eine Überhitzung des Antriebs vermieden werden. Es ist bevorzugt, dass der Lüfter ebenfalls fluchtend mit den übrigen Komponenten auf der Achse des Funktionsblocks angeordnet ist, um die Stellfläche des Funktionsblocks nicht zu vergrößern.

Ferner ist bevorzugt, dass die Kupplung durch eine magnetische Kupplung oder eine Klauenkupplung gebildet ist. Die magnetische Kupplung zeichnet sich durch hohe Verschleißbeständigkeit aus und erfordert wenig Wartung. Die Klauenkupplung besitzt einen einfachen Aufbau, ist kostengünstig und benötigt ebenfalls nur geringen Wartungsaufwand.

In einer bevorzugten Ausführungsform ist die Dosierpumpe durch eine Axialkolbenpumpe gebildet. Diese eignet sich für die Erzeugung hoher Drücke bei gutem volumetrischem Wirkungsgrad, und erbringt eine hohe Leistungsdichte.

In einer bevorzugten Ausführungsform ist der Antrieb durch einen Motor, insbesondere einen Servomotor gebildet. Damit lässt sich die Hubmenge der Axialkolbenpumpe einfach und präzise durch Veränderung der Drehzahl einstellen.

Es ist ferner bevorzugt, dass die Drehzahl des Antriebs steuerbar ist, insbesondere in Abhängigkeit von detektierten Druck-, Temperatur- und Volumenwerten. Es kann somit bei Überwachung aller relevanten Parameter eine hochgenaue Dosierung der Komponente erzielt werden.

Eine Verwendung des erfindungsgemässen Funktionsblocks wird im Anspruch 17 beansprucht.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1a: eine Vorderansicht eines Funktionsblocks gemäß einem Ausführungsbeispiel der Erfindung;
- Fig. 1b: eine Seitenansicht des Funktionsblocks aus Fig. 1a;
- Fig. 2a: eine perspektivische Vorderansicht des Funktionsblocks auch Fig. 1a und 1b;
- Fig. 2b: eine perspektivische Hinteransicht des Funktionsblocks auch Fig. 2a;
- Fig. 3: ein R & I-Diagramm, des Funktionsblocks aus Figuren 1a bis 2b.

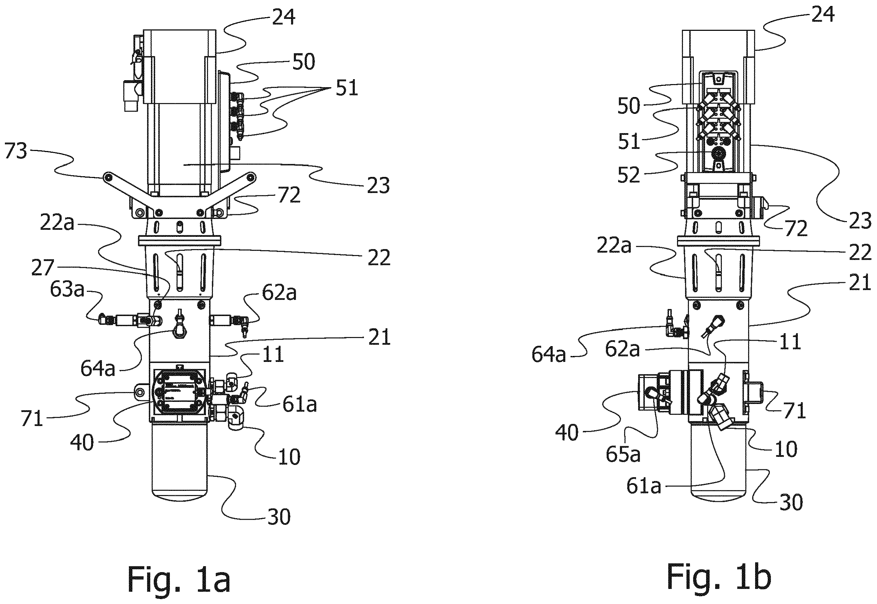

In Figur 1a ist eine Vorderansicht eines Funktionsblocks gemäß einem Ausführungseispiel der Erfindung gezeigt. Der Funktionsblock weist ein Anschlusssegment 12 mit einem Einlass 10 auf, an den ein Reservoir einer zu fördernden Komponente oder eine Ringleitung, die die Komponente führt, anschließbar ist. Die Komponente wird von dem Einlass 10 in den Funktionsblock geleitet. Benachbart zum Einlass 10 ist - ebenfalls am Anschlusssegment - ein Auslass 11 vorgesehen, aus dem die Komponente im Hochdruck ausgefördert wird. An den Auslass 11 kann ein Mischkopf angeschlossen werden, in den die Komponente dosiert unter einem vorgegebenen Druck gefördert werden kann.

Die Fluidführung der Komponente zwischen dem Einlass 10 und dem Auslass 11 ist vollständig innerhalb des Funktionsblocks geführt. Angrenzend an dem Einlass 10 und den Auslass 11 ist eine Dosierpumpe 21 mit einem Dosierpumpengehäuse 28 vorgesehen. Die Dosierpumpe 21 ist im Dosierpumpengehäuse 28 aufgenommen und erstreckt sich teilweise in das Auslasssegment 12 hinein. Die Dosierpumpe 21 ist in dem vorliegenden Ausführungsbeispiel durch eine Axialkolbenpumpe gebildet. Die Dosierpumpe 21 ist mit einer Kupplung 22 verbunden, die in einem Verbindungsstück 22a aufgenommen ist, das fluchtend mit der Dosierpumpe 21 angeordnet und verbunden ist. Die Kupplung 22 ist in dem vorliegenden Ausführungsbeispiel als Klauenkupplung ausgebildet. Es kann jedoch auch eine Magnetkupplung verwendet werden. Das zweite Ende der Kupplung 22 ist mit einem Antrieb 23 verbunden, der wiederum fluchtend mit der Kupplung 22 und dem Verbindungsstück 22a angeordnet ist. im vorliegenden Ausführungsbeispiel ist der Antrieb 23 durch einen Servo-Synchronmotor mit einem Drehmoment von 45 Nm und einer steuerbaren Drehzahl bis zu 2000 Umdrehungen pro Minute gebildet.

Die fluchtende Anordnung der Dosierpumpe 21, der Kupplung 22 und des Antriebs 23 legt eine Achse des Funktionsblocks fest. Durch die Anordnung der Dosierpumpe 21, der Kupplung 22 und des Antriebs 23 auf einer Achse wird eine äußerst kompakte Funktionseinheit geschaffen, deren Stellfläche im Wesentlichen auf den Durchmesser dieser drei Bauteile reduziert ist. In der konkret dargestellten Ausführungsform ist die Dosierpumpe 21 in den beiden Teilabschnitten des Anschlusssegments 12 einerseits und des Dosierpumpengehäuses 28 andererseits aufgenommen, so dass in der konkreten Ausführungsform in axialer Anordnung ausgehend vom Antrieb 23 folgende Bauteile säulenartig aneinandergesetzt sind:
- Antrieb 23
- Kupplung 22
- Dosierpumpengehäuse 28
   und
- Anschlusssegment 12.

An der Kupplung 22 und dem Antrieb 23 gegenüberliegenden Ende des Funktionsblocks befindet sich eine Filtereinheit 30, die mit dem den Funktionsblock starr verbunden ist, insbesondere dort angeschraubt ist.. Die Filtereinheit 30 ist mit dem Einlass 10 fluidverbunden, so dass eine zugeführte Komponente von dem Einlass 10 zunächst durch die Filtereinheit 30 strömt. In dem Filterelement 30 ist ein Einwegfilter aufgenommen, der vorzugsweise eine Filterfeinheit von 200 µm aufweist. Damit können Verunreinigungen aus der Komponente zuverlässig entfernt werden. Ein Wechsel des Einwegfilters kann einfach erfolgen, indem die Filtereinheit 30 abgeschraubt wird und der Einwegfilter ausgetauscht wird. Da die Filtereinheit 30 direkt an den Funktionsblock angesetzt ist, ist ein möglichst kurzer Strömungsweg der Komponente in dem Funktionsblock geschaffen.

Ein Sicherheitsventil 27 ist zur Limitierung des Systemdrucks vorgesehen. Es ist mit einem Punkt des Strömungsweges stromabwärts der Dosierpumpe 21 angeordnet. Das Sicherheitsventil 27 limitiert den Systemdruck vorzugsweise auf 200 bar. Bei Überschreiten dieses Drucks öffnet das Sicherheitsventil 27, um die Komponente nach außen abzuführen und so den unzulässigen Überdruck im inneren des Funktionsblocks zu senken und damit Schäden an den Komponenten des Funktionsblocks vorzubeugen.

Oberhalb des Antriebs 23 ist ein Lüfter 24 vorgesehen, der ebenfalls auf der durch die Komponenten 21,22 und 23 vorgegebenen Achse fluchtend angeordnet ist. Der Lüfter 24 dient der Kühlung des Antriebs 23.

Der Funktionsblock zeichnet sich durch eine äußerst kompakte Bauweise aus. Um den Funktionsblock beispielsweise an einem Roboter montieren zu können, sind auf der Rückseite des Funktionsblocks eine untere Befestigungsplatte 71 und eine obere Befestigungsplatte 72 vorgesehen. Ein doppelter Haltegriff 73 ist an dem oberen Ende des Verbindungsstücks 22a angebracht und bietet einen sicheren Halt, um den Funktionsblock anzuheben.

In dem gezeigten Ausführungsbeispiel ist ein Volumensensor 40, ggf. auch mit einer Anzeige vorgesehen. Dieser dient der Erfassung und ggf. der Anzeige des geförderten Volumenstroms. Der Volumensensor 40 umfasst einen zugehörigen Anschluss 65, der mit der Signal-Verteilerbuchse verbunden werden kann, um ein Signal des Volumensensors 40 auszugeben.
Der Funktionsblock umfasst eine Signal-Verteilerbox 50, die mehrere Anschlüsse 51 aufweist. Mit den Anschlüssen 51 können verschiedene Sensoren oder Messgeräte verbunden werden. Im vorliegenden Ausführungsbeispiel sind in dem Funktionsblock drei (nicht gezeigte) Drucksensoren 61, 62 und 63 sowie ein (nicht gezeigter) Temperatursensor 64 integriert, die den Druck und die Temperatur der Komponente an verschiedenen Punkten des Strömungsweges innerhalb des Funktionsblocks erfassen. Jeweils zugehörige Anschlüsse 61a, 62a, 63a und 64a sind aus dem Funktionsblock nach außen geführt und in Fig. 1a sichtbar. Diese Anschlüsse 61a, 62a, 63a, 64a können mit den Anschlüssen 51 der Signal-Verteilerbox verbunden werden. Durch die Integration der Signal-Verteilerbox 50 in den Funktionsblock können die Signalwege der benötigten Messsignale kurz gehalten werden und der Aufwand der Verkabelung reduziert werden, da nur sehr kurze Verbindungswege realisiert werden müssen. Da die Signal-Verteilerbox 50 mehr Anschlüsse 51 aufweist als Sensoren in dem Funktionsblock vorhanden sind, können ferner weitere sinnvolle externe Signale eingespeist werden. So kann beispielsweise die Temperatur der Komponente in dem Reservoir oder der Druck in der Ringleitung, aus der die Komponente zugeführt wird, erfasst werden und zur Fehlerdiagnose genutzt werden. Ebenso können der Druck oder die Flussmenge der Komponente in einem anschließbaren Mischkopf erfasst werden, um Dosierung und Druckbeaufschlagung der Komponente verlässlich zu erfassen und zu steuern.

In Figur 1b ist eine Seitenansicht des Funktionsblocks aus Figur 1a gezeigt. Hier ist zu sehen, dass die Signal-Verteilerbox 50 acht Anschlüsse 51 für Sensoren aufweist. Die Signal-Verteilerbox 50 umfasst außerdem ein Signalanschluss 52, über den der Funktionsblock mit einer Recheneinheit verbindbar ist. Somit dient die Signal-Verteilerbox 50 als Schnittstelle, so dass von den Sensoren erfasste Werte zur Überwachung an die Recheneinheit geleitet werden können oder eine Steuerung des Funktionsblocks mittels der Recheneinheit ermöglicht ist.

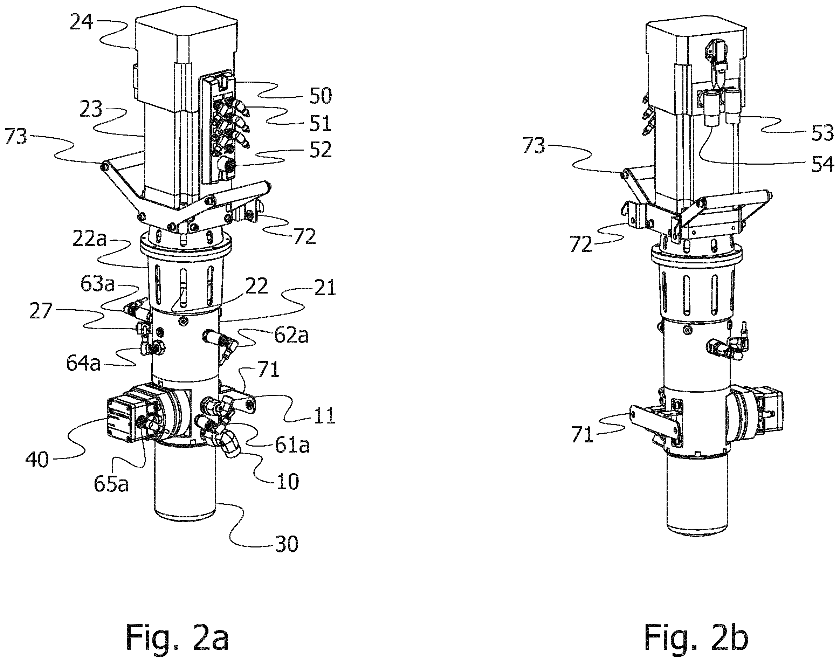

In Figur 2a ist der Funktionsblock in einer perspektivischen Vorderansicht gezeigt. Figur 2b ist eine perspektivische Hinteransicht des Funktionsblocks. Hier sind ein Antriebsanschluss 53 und ein Lüfteranschluss 54 zu sehen, über die der Antrieb 23 und der Lüfter 54 mit Energie versorgt werden können.

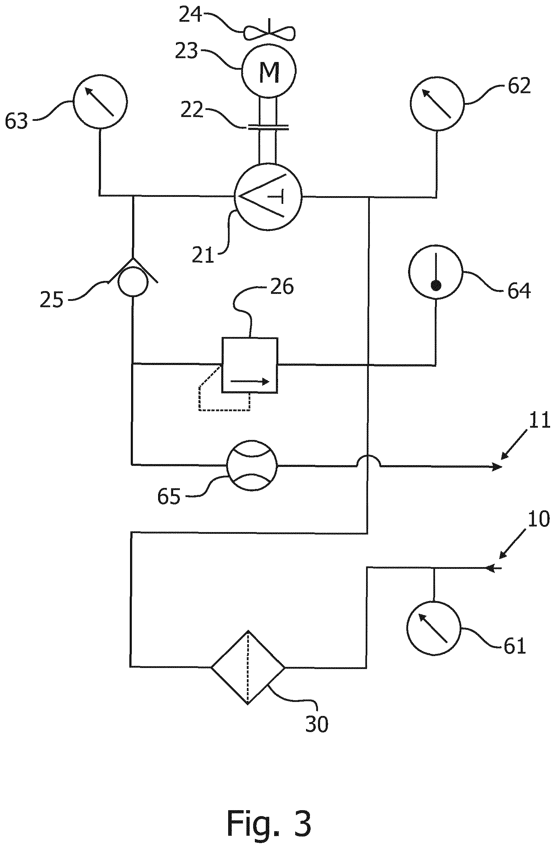

Der Strömungsweg im Inneren des in den Figuren 1a bis 2b gezeigten Funktionsblocks wird untenstehend mit Bezug auf Figur 3 erläutert, die ein R & I-Schema Schaltplan des Funktionsblocks zeigt. Die flüssige Komponente wird über den Einlass 10 in den Funktionsblock angesaugt. An dem Einlass 10 ist der erste Drucksensor 61 vorgesehen, dessen Anschluss 61a in den Figuren 1a bis 2a gezeigt ist. Mit dem ersten Drucksensor 61 wird der Eingangsdruck detektiert. Die Komponente wird als nächstes durch das Filterelement 30 geführt und von Verunreinigungen befreit. Die gefilterte Komponente strömt weiter in die Dosierpumpe 21. Einlassseitig der Dosierpumpe 21 sind der zweite Drucksensor 62 und der Temperatursensor 64 angeordnet. Aus der Differenz der Druckwerte, die von dem ersten Drucksensor 61 und dem zweiten Drucksensor 62 gemessen wurden, kann der Druckabfall an dem Filterelement 30 ermittelt werden und bestimmt werden, ob der Einwegfilter ausgetauscht werden muss.

Die Dosierpumpe 21 ist über die Kupplung 22 mit dem Antrieb 23 verbunden und wird durch diesen angetrieben. Auslassseitig der Dosierpumpe 21 ist der dritte Drucksensor 63 angeordnet, der den Druck der Komponente nach Druckbeaufschlagung detektiert. Die Komponente strömt durch ein Rückschlagventil 25. Dieses unterbindet einen Rückfluss der Komponente in die Dosierpumpe 21. Vor dem Fluss der druckbeaufschlagten Komponente durch den Auslass 11 an das Förderziel ist der Volumensensor 65 angeordnet und detektiert die Durchflussmenge der Komponente.

Auslassseitig der Dosierpumpe 21 ist ein Druckbegrenzungsventil 26 vorgesehen, das bei Überschreitung eines Grenzdrucks eine Fluidverbindung zu der Eingangsseite der Dosierpumpe 21 herstellt. Der Grenzdruck wird je nach Herstellungsverfahren (Niederdruckverfahren oder Hochdruckverfahren) gewählt, übersteigt aber nicht den maximalen Systemdruck, bei dem das Sicherheitsventil 27 öffnet.

Die Drehzahl des Servo-Synchromotors, der in dem beschriebenen Ausführungsbeispiel als Antrieb 23 vorgesehen ist, kann mit hoher Präzision gesteuert werden. Damit kann die Druckbeaufschlagung der Komponente mittels der Dosierpumpe 21 genau gesteuert werden. somit können der Ausgangsdruck und die Fördermenge der Komponente mit hoher Präzision gesteuert werden. Bei der Steuerung können die gemessenen Druck-, Temperatur- und Volumenwerte berücksichtigt werden, so dass die Präzision der Komponentenförderung nochmals erhöht wird und eine zuverlässige Fehlerdiagnostik durchgeführt werden kann. Da der gesamte in Figur 3 gezeigte Strömungsweg in dem Funktionsblock auf engstem Raum gebildet ist, sind die Strömungs- und Temperaturverluste auf ein Minimum reduziert. Die erfassten Druck- und Temperaturwerte weisen daher ebenfalls eine geringe Hysterese und hohe Genauigkeit auf.

Zur Herstellung von Polyurethan können zwei der beschriebenen Funktionsblöcke verwendet werden, die jeweils eine der benötigten Komponenten in einen geeigneten Mischkopf fördern. Vorteilhafterweise werden die beiden Funktionsblöcke dann von einer Steuereinheit gesteuert, so dass das Mischverhältnis der beiden Komponenten und die gesamte Auftragsmenge zuverlässig gesteuert werden können. Damit kann eine komplette mobile Polyurethananlage mit geringem Platzbedarf geschaffen werden, die sich beispielsweise hervorragend für die Montage an einem Roboter eignet.

Durch den äußerst kompakten Aufbau des Funktionsblocks ist es möglich, zu Wartungszwecken oder bei einem Defekt über die Kupplung 22 den Funktionsblock mit wenigen Handgriffen auszutauschen. Dadurch wird ein sehr zuverlässiger und wartungsfreundlicher Betrieb ermöglicht. Zu Wartungszwecken kann der zu wartende Funktionsblock ausgekuppelt und durch einen anderen betriebsfertigen Funktionsblock ersetzt werden. Gleiches gilt im Falle eines Defekts. Hier kann ein funktionsfähiger Ersatzfunktionsblock innerhalb kürzester Zeit angekuppelt werden.

### Bezugszeichenliste

- 10: Einlass
- 11: Auslass
- 12: Anschlusssegment
- 21: Pumpe
- 22: Kupplung
- 22a: Pumpenträger/Verbindungsstück
- 23: Antrieb
- 24: Lüfter
- 25: Rückschlagventil
- 26: Druckbegrenzungsventil
- 27: Sicherheitsventil
- 28: Dosierpumpengehäuse
- 30: Filterelement
- 40: Volumensensor
- 50: Signal-Verteilerbox
- 51: Sensoranschlüsse
- 52: Signalanschluss
- 53: Antriebsanschluss
- 54: Lüfteranschluss
- 61: erster Drucksensor
- 61a: Anschluss des ersten Drucksensors
- 62: zweiter Drucksensor
- 62a: Anschluss des zweiten Drucksensors
- 63: dritter Drucksensor
- 63a: Anschluss des dritten Drucksensors
- 64: Temperatursensor
- 64a: Anschluss des Temperatursensors
- 65: Anschluss des Volumensensors
- 71: untere Befestigungsplatte
- 72: obere Befestigungsplatte
- 73: Haltegriff

## Patentansprüche

1. Funktionsblock für eine Mischanlage zur Dosierung einer flüssigen Komponente, insbesondere zur Herstellung von Polyurethan,
Folgendes aufweisend:
- einen Einlass (10) zur Zuführung der Komponente,
- einen Auslass (11) zur Ausförderung der Komponente,
- eine Dosierpumpe (21) zur Förderung der Komponente aus dem Einlass (10) und zur Druckerhöhung der Komponente,
- einen Antrieb (23) für die Dosierpumpe (21),
- eine Kupplung (22) zur Verbindung zwischen der Dosierpumpe (21) und dem Antrieb (23),
**dadurch gekennzeichnet, dass**
der Funktionsblock als integrale Einheit ausgebildet ist, indem die Komponenten des Funktionsblocks durch ein gemeinsames Gehäuse zu einer integralen Einheit verbunden sind,
und die Fluidführung der Komponente zwischen dem Einlass (10) und dem Auslass (11) vollständig innerhalb des Funktionsblocks geführt ist, wobei der Funktionsblock eine Achse aufweist, auf der die Dosierpumpe (21), die Kupplung (22) und der Antrieb (23) fluchtend angeordnet sind,
wobei der Funktionsblock eine Filtereinheit (30) umfasst, die fluchtend auf der Achse des Funktionsblocks angeordnet ist und in einem Strömungsweg zwischen dem Einlass (10) und der Dosierpumpe (21) fluidverbunden ist.

2. Funktionsblock nach Anspruch 1,
**dadurch gekennzeichnet, dass**
die Filtereinheit (30) starr an den Funktionsblock angeflanscht ist.

3. Funktionsblock nach Anspruch 2,
**dadurch gekennzeichnet, dass**
die Filtereinheit (30) auf der der Kupplung (22) bzw. dem Antrieb (23) gegenüberliegenden Seite an den Funktionsblock angeflanscht ist.

4. Funktionsblock nach einem der vorhergehenden Ansprüche,
**gekennzeichnet durch**
eine Signal-Verteilerbox (50), die eine Vielzahl von Anschlüssen (51) zur Verbindung mit Sensoren, bevorzugterweise mindestens vier Anschlüsse (51), weiter bevorzugt acht Anschlüsse (51), bereitstellt und dazu ausgebildet ist, als Schnittstelle zu einer Recheneinheit zu fungieren.

5. Funktionsblock nach einem der vorhergehenden Ansprüche,
**dadurch gekennzeichnet, dass**
ein erster Drucksensor (61), mit dem ein Speisedruck der Komponente an dem Einlass (10) detektierbar ist, und/oder ein zweiter Drucksensor (62), mit dem ein Eingangsdruck der Dosierpumpe (21) detektierbar ist, und/oder
ein dritter Drucksensor (63), mit dem ein Ausgabedruck der Dosierpumpe (21) detektierbar ist, in dem Funktionsblock integriert ist.

6. Funktionsblock nach einem der vorhergehenden Ansprüche,
**dadurch gekennzeichnet, dass**
ein Temperatursensor (64) in dem Funktionsblock integriert ist, mit dem die Temperatur der Komponente detektierbar ist.

7. Funktionsblock nach einem der vorhergehenden Ansprüche,
**dadurch gekennzeichnet, dass**
in dem Strömungsweg vor dem Auslass (11) ein Volumensensor (40) vorgesehen ist, mit dem der Volumenstrom der Komponente an dem Auslass (11) detektierbar ist.

8. Funktionsblock nach einem der vorhergehenden Ansprüche,
**dadurch gekennzeichnet, dass**
ausgangsseitig der Dosierpumpe (21) ein Rückschlagventil (25) vorgesehen ist, das einen Rückfluss der Komponente entgegen der Förderrichtung verhindert.

9. Funktionsblock nach einem der vorhergehenden Ansprüche,
**dadurch gekennzeichnet, dass**
ein Druckbegrenzungsventil (26) im Strömungsweg ausgangsseitig der Dosierpumpe (21) vorgesehen ist, das derart ausgebildet ist, dass bei Überschreitung eines Maximaldrucks eine Fluidverbindung mit der Einlassseite der Dosierpumpe (21) hergestellt wird.

10. Funktionsblock nach einem der vorhergehenden Ansprüche,
**gekennzeichnet durch**
ein Sicherheitsventil (27), das in Fluidverbindung mit dem Strömungsweg der Komponente angeordnet ist derart ausgebildet ist, dass es bei Überschreiten eines maximalen Systemdrucks öffnet, so dass der Druck in dem Strömungsweg abfällt.

11. Funktionsblock nach einem der vorhergehenden Ansprüche,
**dadurch gekennzeichnet, dass**
an dem Antrieb (23) ein Lüfter (24) zur Kühlung des Antriebs (23) angeordnet ist.

12. Funktionsblock nach einem der vorhergehenden Ansprüche,
**dadurch gekennzeichnet, dass**
die Kupplung (22) durch eine magnetische Kupplung oder eine Klauenkupplung gebildet ist.

13. Funktionsblock nach einem der vorhergehenden Ansprüche,
**dadurch gekennzeichnet, dass**
die Dosierpumpe (21) durch eine Axialkolbenpumpe gebildet ist.

14. Funktionsblock nach einem der vorhergehenden Ansprüche,
**dadurch gekennzeichnet, dass**
der Antrieb (23) durch einen Motor, insbesondere einen Servomotor gebildet ist.

15. Funktionsblock nach einem der vorhergehenden Ansprüche,
**dadurch gekennzeichnet, dass**
die Drehzahl des Antriebs (23) steuerbar ist, insbesondere in Abhängigkeit von detektierten Druck-, Temperatur- und Volumenwerten.

16. Funktionsblock nach einem der vorhergehenden Ansprüche, **dadurch gekennzeichnet, dass** zur Montage des Funktionsblocks an einem Roboter auf der Rückseite des Funktionsblocks eine untere Befestigungsplatte (71) und eine obere Befestigungsplatte (72) vorgesehen sind.

17. Verwendung zweier Funktionsblöcke nach einem der Ansprüche 1 bis 16 zur Herstellung von Polyurethan, wobei jeder Funktionsblock jeweils eine Komponente in einen Mischkopf fördert.

## Claims

1. Functional block for a mixing installation for metering a liquid component, particularly for producing polyurethane, comprising the following:
- an inlet (10) for the feed of the component,
- an outlet (11) for the conveying out of the component,
- a metering pump (21) for the conveying of the component from the inlet (10) and for the pressure increase of the component,
- a drive (23) for the metering pump (21), and
- a coupling (22) for the connection between the metering pump (21) and the drive (23),
**characterised in that**
the functional block is constructed as an integral unit **in that** the components of the functional block are connected by a common housing to form an integral unit,
and the fluid feed of the component between the inlet (10) and the outlet (11) is conducted completely within the functional block, wherein the functional block has an axis on which the metering pump (21), the coupling (22) and the drive (22) are arranged in alignment, wherein the functional block comprises a filter unit (30) which is arranged in alignment on the axis of the functional block and has fluid connection into a flow path between the inlet (10) and the metering pump (21).

2. Functional block according to claim 1, **characterised in that** the filter unit (30) is rigidly flange-mounted on the functional block.

3. Functional block according to claim 2, **characterised in that** the filter unit (30) is flange-mounted on the side of the functional block opposite the coupling (22) or the drive (23).

4. Functional block according to any one of the preceding claims, **characterised by** a signal distributor box (50) which provides a plurality of terminals (51) for connection with sensors, preferably at least four terminals (51), more preferably eight terminals (51), and which is constructed for the purpose of functioning as an interface to a computer unit.

5. Functional block according to any one of the preceding claims, **characterised in that** a first pressure sensor (61) by which a supply pressure of the components to the inlet (10) is detectable and/or a second pressure sensor (62) by which an inlet pressure of the metering pump (21) is detectable and/or a third pressure sensor (63) by which an output pressure of the metering pump (21) is detectable is or are integrated in the functional block.

6. Functional block according to any one of the preceding claims, **characterised in that** a temperature sensor (64) by which the temperature of the components is detectable is integrated in the functional block.

7. Functional block according to any one of the preceding claims, **characterised in that** a volume sensor (40) by which the volume flow of the component at the outlet (11) is detectable is provided in the flow path upstream of the outlet (11).

8. Functional block according to any one of the preceding claims, **characterised in that** the metering pump (21) is provided at the outlet side with a non-return valve (25) preventing a return flow of the component oppositely to the conveying direction.

9. Functional block according to any one of the preceding claims, **characterised in that** a pressure limiting valve (26) is provided in the flow path at the outlet side of the metering pump (21) and is so constructed that in the case of exceeding a maximum pressure a fluid connection with the inlet side of the metering pump (21) is produced.

10. Functional block according to any one of the preceding claims, **characterised in that** a safety valve (27) which is arranged in fluid connection with the flow path of the components is so constructed that it opens when a maximum system pressure is exceeded, so that the pressure in the flow path drops.

11. Functional block according to any one of the preceding claims, **characterised in that** a fan (24) for cooling the drive (23) is arranged at the drive (23).

12. Functional block according to any one of the preceding claims, **characterised in that** the coupling (22) is formed by a magnetic coupling or a claw coupling.

13. Functional block according to any one of the preceding claims, **characterised in that** the metering pump (21) is formed by an axial piston pump.

14. Functional block according to any one of the preceding claims, **characterised in that** the drive (23) is formed by a motor, particularly a servomotor.

15. Functional block according to any one of the preceding claims, **characterised in that** the rotational speed of the drive (23) is controllable, particularly in dependence on detected pressure, temperature and volume values.

16. Functional block according to any one of the preceding claims, **characterised in that** a lower fastening plate (71) and an upper fastening plate (72) are provided for mounting the functional block on a robot on the rear side of the functional block.

17. Use of two functional blocks according to any one of claims 1 to 16 for producing polyurethane, wherein each functional block conveys a respective component into a mixing head.

## Revendications

1. Bloc fonctionnel pour une installation de mélange destinée au dosage d'un composant liquide, en particulier pour la fabrication de polyuréthane, comprenant:
- une entrée (10) pour la fourniture du composant,
- une sortie (11) pour l'extraction du composant,
- une pompe de dosage (21) pour le transport du composant à partir de l'entrée (10) et pour l'augmentation de la pression du composant,
- un entraînement (23) pour la pompe de dosage (21),
- un accouplement (22) pour la liaison entre la pompe de dosage (21) et l'entraînement (23),
**caractérisé en ce que** le bloc fonctionnel est réalisé sous la forme d'une unité intégrée, du fait que les composants du bloc fonctionnel sont assemblés en une unité intégrée au moyen d'un boîtier commun,
et le guidage fluide du composant entre l'entrée (10) et la sortie (11) est mené entièrement à l'intérieur du bloc fonctionnel,
dans lequel le bloc fonctionnel présente un axe, sur lequel la pompe de dosage (21), l'accouplement (22) et l'entraînement (23) sont disposés en alignement,
dans lequel le bloc fonctionnel comprend une unité de filtre (30), qui est disposée en alignement sur l'axe du bloc fonctionnel et qui est fluidiquement connectée dans un chemin d'écoulement entre l'entrée (10) et la pompe de dosage (21).

2. Bloc fonctionnel selon la revendication 1, **caractérisé en ce que** l'unité de filtre (30) est rigidement assemblée par bridage au bloc fonctionnel.

3. Bloc fonctionnel selon la revendication 2, **caractérisé en ce que** l'unité de filtre (30) est assemblée par bridage au bloc fonctionnel sur le côté opposé à l'accouplement (22) ou à l'entraînement (23).

4. Bloc fonctionnel selon l'une quelconque des revendications précédentes, **caractérisé par** une boîte de répartition de signaux (50), qui procure une multiplicité de raccords (51) pour le raccordement à des capteurs, de préférence au moins quatre raccords (51), de préférence encore huit raccords (51), et qui est configurée pour faire office d'interface vers une unité de calcul.

5. Bloc fonctionnel selon l'une quelconque des revendications précédentes, **caractérisé en ce qu'**un premier capteur de pression (61), avec lequel une pression d'alimentation du composant à l'entrée (10) peut être détectée, et/ou un deuxième capteur de pression (62), avec lequel une pression d'entrée de la pompe de dosage (21) peut être détectée, et/ou un troisième capteur de pression (63), avec lequel une pression de sortie de la pompe de dosage (21) peut être détectée, est intégré dans le bloc fonctionnel.

6. Bloc fonctionnel selon l'une quelconque des revendications précédentes, **caractérisé en ce qu'**un capteur de température (64), avec lequel la température du composant peut être détectée, est intégré dans le bloc fonctionnel.

7. Bloc fonctionnel selon l'une quelconque des revendications précédentes, **caractérisé en ce qu'**il est prévu dans le chemin d'écoulement avant la sortie (11) un détecteur de volume (40), avec lequel un débit volumique du composant à la sortie (11) peut être détecté.

8. Bloc fonctionnel selon l'une quelconque des revendications précédentes, **caractérisé en ce qu'**il est prévu à la sortie de la pompe de dosage (21) un clapet anti-retour (25), qui empêche un reflux du composant contre la direction de transport.

9. Bloc fonctionnel selon l'une quelconque des revendications précédentes, **caractérisé en ce qu'**il est prévu dans le chemin d'écoulement, à la sortie de la pompe de dosage (21), une soupape de limitation de pression (26), qui est réalisée de telle manière qu'en cas de dépassement d'une pression maximale il s'établisse une liaison fluidique avec le côté d'entrée de la pompe de dosage (21).

10. Bloc fonctionnel selon l'une quelconque des revendications précédentes, **caractérisé par** une soupape de sécurité (27), qui est disposée en liaison fluidique avec le chemin d'écoulement du composant, et est configurée de telle manière qu'en cas de dépassement d'une pression de système maximale elle s'ouvre de telle façon que la pression baisse dans le chemin d'écoulement.

11. Bloc fonctionnel selon l'une quelconque des revendications précédentes, **caractérisé en ce qu'**un ventilateur (24) est disposé sur l'entraînement (23) pour le refroidissement de l'entraînement (23).

12. Bloc fonctionnel selon l'une quelconque des revendications précédentes, **caractérisé en ce que** l'accouplement (22) est formé par un accouplement magnétique ou un accouplement à crabot.

13. Bloc fonctionnel selon l'une quelconque des revendications précédentes, **caractérisé en ce que** la pompe de dosage (21) est formée par une pompe à piston axial.

14. Bloc fonctionnel selon l'une quelconque des revendications précédentes, **caractérisé en ce que** l'entraînement (23) est formé par un moteur, en particulier un servomoteur.

15. Bloc fonctionnel selon l'une quelconque des revendications précédentes, **caractérisé en ce que** la vitesse de rotation de l'entraînement (23) peut être réglée en particulier en fonction de valeurs détectées de la pression, de la température et du volume.

16. Bloc fonctionnel selon l'une quelconque des revendications précédentes, **caractérisé en ce qu'**il est prévu pour le montage du bloc fonctionnel sur un robot une plaque de fixation inférieure (71) et une plaque de fixation supérieure (72) sur le côté arrière du bloc fonctionnel.

17. Utilisation de deux blocs fonctionnels selon l'une quelconque des revendications 1 à 16 pour la fabrication de polyuréthane, dans lequel chaque bloc fonctionnel transporte respectivement un composant dans une tête de mélange.
